# EUROPEAN PATENT SPECIFICATION

(11) **EP 2 117 879 B1**
(45) Date of publication and mention of the grant of the patent: **06.09.2017**
(21) Application number: 07855616.4
(22) Date of filing: 20.12.2007
(51) Int. Cl.: B29C 65/34, B60R 13/00, B60R 13/02, B60R 3/00, B60R 9/04, B62D 33/023, B23K 11/00

(54) **RESISTIVE IMPLANT WELDING FOR STRUCTURAL BONDS IN AUTOMOTIVE APPLICATIONS**
RIW-SCHWEISSEN (RIW - RESISTIVE IMPLANT WELDING) FÜR STRUKTURVERBINDUNGEN IN KRAFTFAHRZEUGANWENDUNGEN
SOUDURE PAR IMPLANT RÉSISTANT POUR LIAISONS STRUCTURELLES DANS DES APPLICATIONS AUTOMOBILES

(30) Priority: 22.12.2006 US 644209
(43) Date of publication of application: 18.11.2009
(73) Proprietor: Magna International Inc., Aurora, ON L4G 7K1 (CA)
(72) Inventor: GRGAC, Steve, Mississauga, CA L5R 1B8 (CA); ROUISON, David Denis, Woodbridge, Ontario L4L 4A4 (CA); MCLEOD, Martin R., Barrie, Ontario L4M 5H8 (CA)
(74) Representative: Glawe, Delfs, Moll
(86) International application number: PCT/CA2007/002335
(87) International publication number: WO 2008/077249

(56) References cited:
- WO-A1-2007/101334
- WO-A1-2007/101334
- WO-A1-2009/070890
- WO-A1-2009/073967
- WO-A2-2007/016152
- FR-A1- 2 771 699
- GB-A- 1 205 221
- GB-A- 1 315 373
- GB-A- 2 201 120
- JP-A- S6 299 135
- JP-A- H03 180 330
- JP-U- S63 110 145
- US-A- 5 225 025
- US-A- 5 389 184
- US-A- 5 643 390
- US-A1- 2003 155 066
- US-A1- 2005 184 053

## Description

### FIELD OF THE INVENTION

The present invention relates to the use of resistive implant welding for structural welds in automotive applications.

### BACKGROUND OF THE INVENTION

The joining together of two or more plastic components to form a weld or joint is frequently required during the manufacturing automobile components. As the use of plastic material in automotive applications increases there exists a greater need for more ways of welding together such components. One particular requirement is that the weld formed must have a sufficient amount of weld strength. In particular, in vehicle tailgates, such as pick-up truck tailgates the component must be designed to withstand great loads. In order to meet load requirements, composite tailgates are designed as a hollow structure having several reinforcement ribs and flange supports in combination with reinforcement sheets. For tailgates that are formed of thermoplastic composites, the various reinforcement sheets and supportive ribs of the tailgate are fused together using adhesives specially formulated to have high weld strength. The use of such adhesives does add to the length of the manufacturing time due to the time it takes to cure the weld. Also, the adhesives can be costly and contribute to the overall cost of producing the tailgate. Yet other adhesives are less costly and have a faster cure time, they require surface treatments (e.g., corona treatment or plasma treatment) to increase the surface energy of welding faces. These surface treatments are a secondary operation and difficult to control and increase part cost. Therefore, there exists a need to form welds between thermoplastic components that will decrease manufacturing time by reducing the time needed to form the weld, as well as eliminate costly adhesives.

For joining plastic components different methods to create a joint are known. Some methods use adhesives to join two components made of plastic material together (GB 1 315 373 A). Others use a method called resistive implant welding (JP S62 99135 A, GB 2 201 120 A, GB 1 205 221 A, JP H03 180330 A).

Following are the prior art documents discussed dealing with these methods.

GB 1 315 373 A discloses a method where two plastics components are joined using a thermosetting adhesive film or layer In contact with at least one heat conducting element which Is heated to effect joining. The components may be made of cold-press moulded reinforced plastics or moulded self-skinned cellular resins and may be panels of passenger car bodies, truck cabs or cargo containers. Preferably, the adhesive Is used in a gelatinous or stage of cure and may be impregnated upon an absorptive reinforcement, e.g. glass fibre fabric. Suitable adhesives for bonding glass fibre reinforced resins, normally polyester based resins, are epoxides, polysulphides, polyamides or blends of those materials which may incorporate polyamides. In one embodiment, an adhesive strip, having parallel electrical resistance wire filaments embedded therein, Is interposed between two moulded panels. The edge of a first panel Is bent over to engage the surface of a second panel and the edge of the second panel may be chamfered to fit snugly against the first panel. The wires may be copper, aluminium, aluminium alloy or nickel-chrome alloy and are heated to 100-150 C. whilst light pressure Is applied to the assembly.

JP S62 99135 A discloses a method to joint the materials easily without an specific skill by inserting a heated-up insert block of electrically-conductive material, mesh or rod-shaped, between two of the jointing faces, and pressure-welding both of the jointing faces of polyethylene materials to form up single, uniform surface. A heated-up insert block, mesh or rod-shaped, is inserted between the jointing faces and the jointing faces of both polyethylene materials are pressure-welded. After the welded portion is hardened, the outer edge of Insert block protruding out of the faces of polyethylene materials and also the protruded portion formed with the fused polyethylene material are removed to form up a single, uniform surface of the jointed two polyethylene materials. By the said process, the jointing faces of both polyethylene materials are welded uniformly and jointed easily without specific skill.

GB 2 201 120 A discloses a car bumper, that is assembled by welding together a channel-shaped facing component and a rigid backing component, of mutually compatible thermoplastics, using sacrificial heating elements to soften the surface portions to be welded while the components are held in jigs. Once these portions have been softened, but not until then, pressure is applied to force the softened portions together, by means of movable members coextensive with the seams and moved by inflation of resilient tubes carried in recesses in the jig which supports the facing component. After the weld surfaces have thus become fused, they are allowed to cool.

GB 1 205 221 A discloses a method of bonding together two articles having thermoplastics surfaces comprises applying an electromagnetic induction field to a perforated metal member in contact with the adjacent thermoplastics surfaces of the two articles, the heat generated in the metal member heating the surfaces sufficiently for the thermoplastics material to penetrate the perforations of the metal member. Specified thermoplastics are acrylonitrile-butadiene-styrene copolymers, polyvinyl chloride, polyethylene, polypropylene, acrylic resins, cellulose acetate, nylon and polystyrene. The perforated metal member may be in the form of a mesh of wire, metal filaments or strands or may be expanded metal. The articles may be In sheet form, Alternatively, the process may be used to bond indicia to signs, to decorate moulded articles, to implant decorative strips in vinyl floors or to bond motor trim components to thermoplastic articles.

JP H03 180330 A discloses a method to obtain a hollow uniform-walled air spoiler-shaped body having flat outer surface only by removing small burrs, wherein a top part and a bottom part are respectively fixed and electrically conductive material is placed on the surface of the bottom part so as to generate heat through electromagnetic Induction In it in order to weld the parts together into an integral body. A top part and a bottom part, both of which are obtained through injection molding, are set in fixing jigs. Next, between the top part and the bottom part, film-like magnetic film, which is produced as electrically conductive material by mixing metallic powder in synthetic resin material having the same composition as that of the top part and of the bottom part, and cut in size larger than the outer shape of the top part and of the bottom part, is set on the front layer of the bottom part. Next, by pressing the upper fixing jig, to which top part is set, and applying high frequency wave to a coil, which is arranged at the predetermined position, heat is generated through electromagnet Induction In the magnetic film in order to weld the top part and the bottom part together. By cutting off the burrs developed by said welding and applying finish painting, a uniform- walled and low cost air spoiler having the same external appearance as that obtaining by blow molding or reaction molding can be obtained at good yield.

### SUMMARY OF THE INVENTION

The invention proposes a moulded tailgate made of polymer material for a pick-up truck with the features of claim 1.

Document US2003/155066 A1 discloses a moulded tailgate made of polymer material for a pick-up truck comprising a first portion made of polymer material and a second portion made of polymer material and forming a reinforcement sheet. Said first and second portions are glued together. Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Fig. 1 is a perspective view of an exemplarily resistive implant welding machine;
Fig. 2 is a perspective close up view of a fused component being formed in the resistive implant welding machine;
Fig. 3 is a perspective view of a fused component formed as one half of a vehicle tailgate;
Fig. 4 is a cross-sectional view of a first component being fused to a second component; and
Fig. 5 is a plan side view of an alternate embodiment which is not part of the invention.

### DETAILED DESCRIPTION OF THE PREFERRED EMBODIMENTS

The following description of the preferred embodiment(s) is merely exemplary in nature and is in no way intended to limit the invention, its application, or uses.

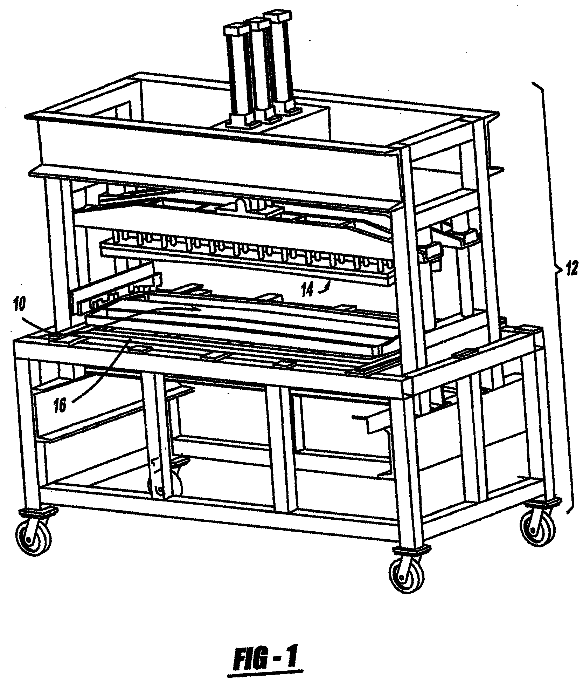

Referring now to Figs. 1-2 a method for forming a fused or welded component using resistive implant welding is depicted. A fused component 10 is shown in a resistive implant welding machine 12. The resistive welding machine 12 has an upper platen 14 capable of moving vertically with respect to the fused component 10. The resistive implant welding machine 12 also has a lower platen 16 upon which the fused component 10 rests and is formed. When the fused component 10 is to be welded the upper platen 14 will move vertically and press down against the fused component 10 and apply pressure.

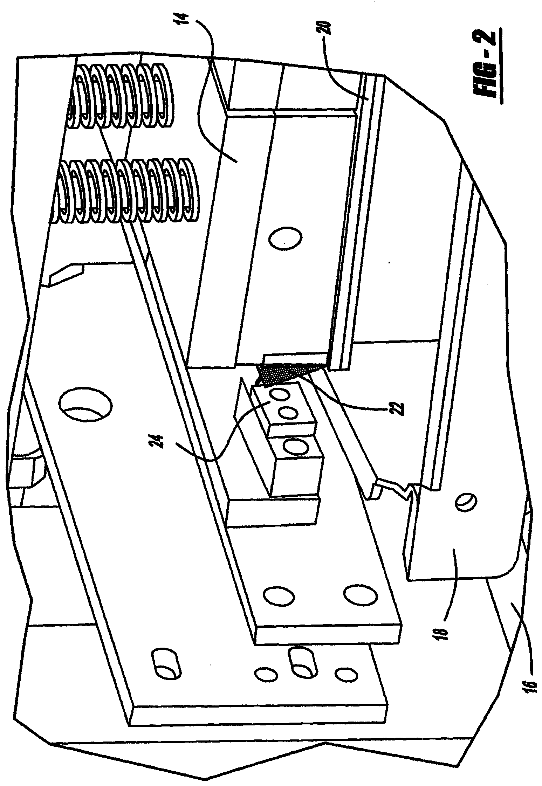

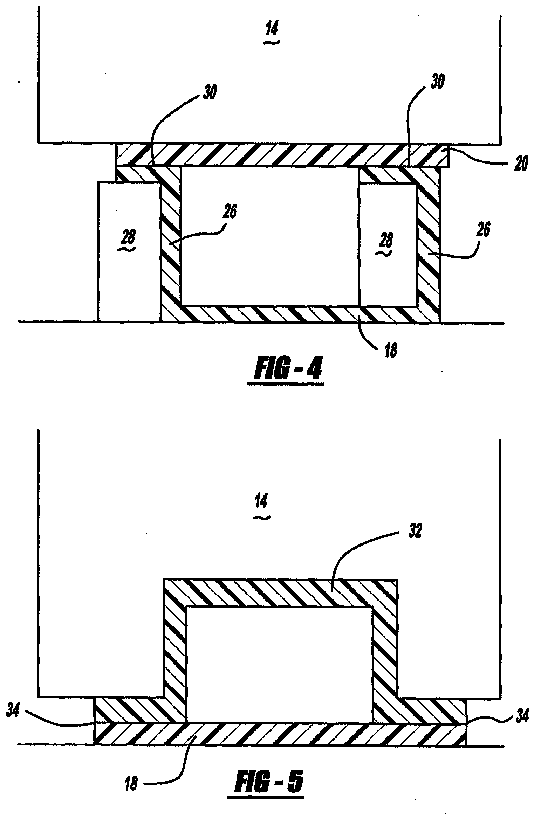

Fig. 2 shows a close up view wherein the upper platen 14 is pressed down against the fused component 10. The fused component 10 has a first portion 18, a second portion 20 and a conductor 22 placed between the first portion 18 and the second portion 20. The first portion 18 and second portion 20 can take many shapes and forms depending upon the particular application of the invention. This will be discussed in greater detail with reference to Figs. 4-5.

The conductor 22 comes into contact with an energy source 24 which can be copper contacts or conductors that energize the conductor 22. The conductor 22 can be wire mesh or some other type of electrically conductive material capable of generating heat when an electrical current is applied. Additionally the conductor 22 can be a single wire. When the upper platen 14 moves down and compresses the first portion 18 and second portion 20 the energy source 24 applies energy to the conductor 22 which causes the conductor to heat up. The heating of the conductor 22 causes portions 18 and 20 to start melting. The pressure applied forces the molten portions 18 and 20 to flow around a wire conductor or through a wire mesh, mixing the two materials together. The heat generated by the conductor 22 combined with the pressure applied by the upper platen 14 to the lower platen 16 causes the weld line to form.

The conductor 22 will remain in the fused component 10 at the weld line. After the pressing and energizing operation has occurred for a predetermined time period the first portion 18 and second portion 20 will be allowed to solidify by cooling to form a weld line. The weld line formed between the first portion 18 and second portion 20 will have a high weld strength, that has been shown to be equal or greater than the type of weld strength obtained using adhesives or mechanical fasteners. Furthermore, the manufacturing time for forming the weld between the first portion 18 and second portion 20 is much shorter than the manufacturing time forming a similar weld using adhesives.

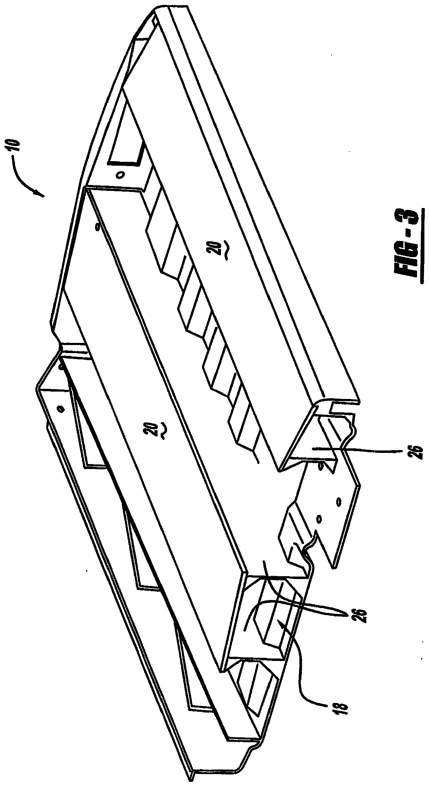

Referring to Fig. 3 a view of a moulded tailgate is shown wherein the first portion 18 is the moulded tailgate portion and the second portion 20 is a reinforcement sheet that strengthens the fused component 10. The first portion 18 has tailgate flanges 26 extending from the first portion 18. The second portion 20 or reinforcement sheet is placed across one or more of the tailgate flanges 26. The conductor (not shown) is placed along the contact area between the tailgate flanges 26 and the second portion 20. The weld line is formed along the length of the surface area of the conductor 22. The placement of the reinforcement sheet strengthens the fused component. For example, a tailgate as moulded in a manner described with respect to the present application can withstand loads greater or less than 2,200 lbs. However, 2,200 lbs. is merely exemplary number and depending on the specification the load can be greater or lesser.

Referring now to Fig. 4 a cross-sectional view of a portion of the tailgate shown in Fig. 3 is shown. The first portion 18 is a moulded tailgate portion having tailgate flanges 26 extending upward from the surface. The second portion 20 is resistive implant welded onto the first portion. The upper platen 14 is shown and applies pressure during the moulding process. In this particular application rigid supports 28 are inserted under portions of the tailgate flanges in order to facilitate and even the weld of the first portion 18 to the second portion 20. The rigid supports 28 can be removed after the welding process is complete. A weld line 30 is formed between the tailgate flanges 26 and the second portion 20. Although the use of rigid supports 28 are described above, it is not necessary to use them in all applications. It is possible to form weld without the use of rigid supports 28.

Fig. 5 shows an alternate embodiment which is not part of the invention wherein there are no tailgate flanges 26; instead a U-Shaped second portion 32 is welded onto the first portion 18 which is a moulded tailgate. This particular embodiment eliminates the need for using rigid supports 28. The upper platen 14 is modified to fit around the U-Shaped second portion 32 and apply pressure at the appropriate location where a weld line 34 between the first portion 18 and the U-Shaped second portion 32 is desired.

## Claims

1. A moulded tailgate made of polymer material for a pick-up truck (10) being manufacturable in a resistive welding machine (12) having an upper platen (14) and a lower platen (16) and comprising:
a first portion (18) made of polymer material having tailgate flanges (26) made of polymer material extending from the first portion (18);
a second portion (20) made of polymer material and forming a reinforcement sheet placed across one or more tailgate flanges (26);
a conductor (22) placed along a contact area between the tailgate flanges (26) and the second portion (20); and
a weld line (30) created along a surface of the conductor (22) between the tailgate flanges (26) and the second portion (20).

2. The moulded tailgate made of polymer material for a pick-up truck (10) of claim 1, wherein said conductor (22) is wire mesh capable of conducting energy and said wire mesh is embedded within said weld line (30, 34).

3. The moulded tailgate made of polymer material for a pick-up truck (10) of claim 1, wherein said conductor (22) is wire mesh capable of conducting energy and facilitating the welding of said first portion (18) and said second portion (20, 32).

## Patentansprüche

1. Gegossene Heckklappe für einen Pick-Up (10), die aus einem Polymermaterial gefertigt ist und die in einem Widerstandsschweißgerät (12) mit einer oberen Platte (14) und einer unteren Platte (16) herstellbar ist und die Folgendes umfasst:
einen ersten Teil (18), der aus einem Polymermaterial gefertigt ist, mit Heckklappenflanschen (26), die aus einem Polymermaterial gefertigt sind und die sich von dem ersten Teil (18) erstrecken;
einen zweiten Teil (20), der aus einem Polymermaterial gefertigt ist und der eine Verstärkungsplatte über einen oder mehrere Heckklappenflansche (26) bildet;
einen Leiter (22), der entlang einer Kontaktfläche zwischen den Heckklappenflanschen (26) und dem zweiten Teil (20) platziert ist; und
eine Bindenaht (30), die entlang einer Oberfläche des Leiters (22) zwischen den Heckklappenflanschen (26) und dem zweiten Teil (20) erzeugt ist.

2. Gegossene Heckklappe für einen Pick-Up (10), die aus einem Polymermaterial gefertigt ist, nach Anspruch 1,
wobei der Leiter (22) ein Drahtgeflecht ist, das dazu in der Lage ist, Energie zu leiten, und wobei das Drahtgeflecht innerhalb der Bindenaht (30, 34) eingebettet ist.

3. Gegossene Heckklappe für einen Pick-Up (10), die aus einem Polymermaterial gefertigt ist, nach Anspruch 1,
wobei der Leiter (22) ein Drahtgeflecht ist, das dazu in der Lage ist, Energie zu leiten und das Verschweißen des ersten Teils (18) und des zweiten Teils (20, 32) zu ermöglichen.

## Revendications

1. Hayon moulé réalisé en matériau polymère pour un camion dit "pick-up" (10) susceptible d'être fabriqué dans une machine de soudage par résistance (12) ayant un plateau supérieur (14) et un plateau inférieur (16) et comprenant :
une première portion (18) réalisée en matériau polymère ayant des flasques de hayon (26) réalisés en matériau polymère s'étendant depuis la première portion (18) ;
une seconde portion (20) réalisée en matériau polymère et formant une plaque de renforcement placée à travers un ou plusieurs flasques de hayon (26) ;
un conducteur (22) placé le long d'une zone de contact entre les flasques de hayon (26) et la seconde portion (20) ; et
une ligne de soudure (30) créée le long d'une surface du conducteur (22) entre les flasques de hayon (26) et la seconde portion (20).

2. Hayon moulé réalisé en matériau polymère pour un camion dit "pick-up" (10) selon la revendication 1,
dans lequel ledit conducteur (22) est un treillis en fil capable de conduire de l'énergie et ledit treillis en fil est noyé à l'intérieur de ladite ligne de soudure (30, 34).

3. Hayon moulé réalisé en matériau polymère pour un camion dit "pick-up" (10) selon la revendication, 1,
dans lequel ledit conducteur (22) est un treillis en fil capable de conduire de l'énergie et facilitant la soudure de ladite première portion (18) et de ladite seconde portion (20, 32).
